# EUROPEAN PATENT SPECIFICATION

(11) **EP 2 767 856 B1**
(45) Date of publication and mention of the grant of the patent: **22.06.2016**
(21) Application number: 14152793.7
(22) Date of filing: 28.01.2014
(51) Int. Cl.: G02B 6/44

(54) **Apparatus for horizontally guiding optical fibre cables and for horizontally depositing excess lengths of the optical fibre cables**
Vorrichtung zur horizontalen Führung von Glasfaserkabeln und zur horizontalen Abscheidung überschüssiger Längen von optischen Glasfaserkabeln
Appareil pour guider horizontalement des câbles à fibres optiques et pour déposer horizontalement les longueurs excessives de tels câbles

(30) Priority: 15.02.2013 DE 202013001434 U
(43) Date of publication of application: 20.08.2014
(73) Proprietor: CCS Technology, Inc., Wilmington, DE 19803 (US)
(72) Inventor: Fietko, Pawel Stanislaw, 37-415 Zaleszany (PL); Gralewski-Sek, Grzegorz Konrad, 91-849 Lodz (PL)
(74) Representative: Sturm, Christoph

(56) References cited:
- EP-A2- 2 053 715
- DE-A1- 10 210 778
- GB-A- 2 256 286
- US-A- 5 923 753
- US-A1- 2002 121 571
- US-A1- 2006 269 210
- US-B1- 7 627 224
- "Optics and optical instruments catalogue 2010", 31 December 2010 (2010-12-31), Edumund Optics, XP002724180, page 191, * page 191 *

## Description

The disclosure relates to an apparatus for horizontally guiding optical fibre cables and for horizontally depositing excess lengths of the optical fibre cables in the region of an optical fibre distributor device. The disclosure also relates to an optical fibre distributor device and to a system consisting of a plurality of optical fibre distributor devices.

When constructing data transfer networks consisting of optical fibres, it is necessary to interconnect optical fibres. Connection points of this type have to be handled both outside buildings and inside buildings. Outside buildings, connection points between optical fibres are received in what are known as cable sleeves or street cabinets. Inside buildings, connection points between optical fibres are handled in what are known as distributor cabinets or distributor racks.

Optical fibre distributor devices known from practice and designed as a distributor cabinet or distributor rack have a frame and, mounted on the frame, a support element, on which modules such as cassettes for receiving splice connections and/or patch connections between optical fibres are assembled. The support element is also referred to as a subrack and is typically mounted pivotably on the frame. Such an optical fibre distributor device is known from DE 20 2004 012 696 U1, wherein, in this prior art, the frame is referred to as a base stand and the support element is referred to as a swivelling frame.

It is also known from DE 20 2004 012 696 U1 that the frame of the distributor device, on which the support element is pivotably mounted, is formed from vertically running struts and from horizontally running struts, wherein, in the region of an upper wall of the frame extending between upper, horizontally running struts, openings are formed, via which optical fibre cables can be introduced into the frame. DE 20 2004 012 696 U1 also discloses the fact that cable guide elements are arranged laterally on the support element, which is pivotably mounted on the frame, and define, on each side of the support element, a cable guide conduit extending in the vertical direction. It is thus possible to guide the optical fibre cables, which are to be fed to the modules positioned on the support element, in a vertical direction in a laterally defined manner beside the support element. In this case, excess lengths of optical fibre cables can also be handled.

A system consisting of a plurality of optical fibre distributor devices designed as a distributor cabinet or distributor rack is known from DE 20 2007 010 780 U1. According to this prior art, in order to ensure structured cabling and to minimize excess lengths to be handled, it is proposed to combine optical fibre distributor devices so as to form logical modules, wherein, to ensure structured cabling within a logical group and to ensure structured cabling between different logical groups, prefabricated optical fibre cables with defined lengths are kept ready.

An apparatus according to the preamble of claim 1 is disclosed by US 2006/269210.

GB 256 289 A also disclosed an apparatus for guiding fibre optic cables.

"Optics and optical instruments catalogue, 2010-12-31, Edmunds Optics, page 191" discloses a device that comprises an adapter plate, a post clamp and an angle bracket.

Based on the above, the object is to create a new apparatus for horizontally guiding optical fibre cables and for horizontally depositing excess lengths of the optical fibre cables in the region of an optical fibre distributor device, and also to create an optical fibre distributor device and a system consisting of a plurality of optical fibre distributor devices.

This object is achieved by an apparatus according to Claim 1. The apparatus for horizontally guiding optical fibre cables and for horizontally depositing excess lengths of the optical fibre cables in the region of an optical fibre distributor device has a main body, which has a base wall and longitudinal walls angled with respect to the base wall and extending on longitudinal sides of the base wall, wherein the base wall together with the longitudinal walls defines the main body contoured with a U-shaped profile, said main body being open at least on one narrow side of the base wall and having a horizontal cable passage opening at least on one narrow side, wherein at least one vertical cable passage opening is introduced into the base wall, and wherein at least one deflection element for optical fibre cables is positioned on the base wall between the two longitudinal walls.

An apparatus is proposed for the first time, with the aid of which optical fibre cables can be guided in a defined manner in the horizontal direction in the region of optical fibre distributor devices or a system consisting of a plurality of optical fibre distributor devices and excess lengths of said cables can be deposited or handled in a defined manner in the horizontal direction. It is thus possible to increase the number and therefore density of the optical fibre cables to be handled in the region of an optical fibre distributor device or the optical fibre cables to be handled in a system consisting of a plurality of optical fibre distributor devices and, at the same time, to ensure defined, structured cabling with good accessibility of all modules.

The main body is preferably open on both opposed narrow sides and has a horizontal cable passage opening, on both opposed narrow sides, for horizontal introduction and/or discharge of optical fibre cables, wherein the base wall, at opposed ends adjacent to the narrow sides, has a vertical cable passage opening for vertical introduction and/or discharge of optical fibre cables.

This embodiment of the apparatus allows particularly effective handling and guidance of the optical fibre cables in the region of an optical fibre distributor device in the horizontal direction above the support element.

In accordance with an advantageous development, the deflection element, or each deflection element, for optical fibre cables has a curved cable guiding wall, wherein the respective deflection element is rotatably or pivotably fastened to the base wall of the main body, adjacently to a first end of the cable guiding wall, and wherein the respective deflection element, adjacently to an opposed second end of the cable guiding wall, has a protrusion extending parallel to the base wall of the main body. This embodiment of the deflection element, or of each deflection element, allows particularly careful handling of the optical fibre cables and a particularly simple adjustment of the respective deflection element to the specific configuration of the optical fibre distributor device, on which the apparatus is used.

The optical fibre distributor device is defined in Claim 9, and the system consisting of a plurality of optical fibre distributor devices is defined in Claim 11.

Exemplary embodiments will emerge from the dependent claims and the following description and will be explained in greater detail with reference to the drawing, in which:
- Figure 1: shows a perspective view of an exemplary embodiment of an apparatus for horizontally guiding optical fibre cables and for horizontally depositing excess lengths of the optical fibre cables in the region of an optical fibre distributor device;
- Figure 2: shows a first detail of the apparatus of Figure 1;
- Figure 3: shows a second detail of the apparatus of Figure 1;
- Figure 4: shows a plurality of possible variants of the apparatus;
- Figure 5: shows a plurality of possible variants of the apparatus together with optical fibre cables;
- Figure 6: shows a perspective view of an exemplary embodiment of a system consisting of a plurality of optical fibre distributor devices positioned laterally side by side;
- Figure 7: shows the system of Figure 6 in a second view;
- Figure 8: shows the system of Figures 6 and 7 together with a cable conduit; and
- Figure 9: shows a perspective view of a further exemplary embodiment of a system consisting of a plurality of optical fibre distributor devices positioned laterally side by side.

The disclosure relates to an apparatus for horizontally guiding optical fibre cables and for horizontally depositing excess lengths of the optical fibre cables in the region of an optical fibre distributor device. The disclosure also relates to an optical fibre distributor device and to a system consisting of a plurality of optical fibre distributor devices.

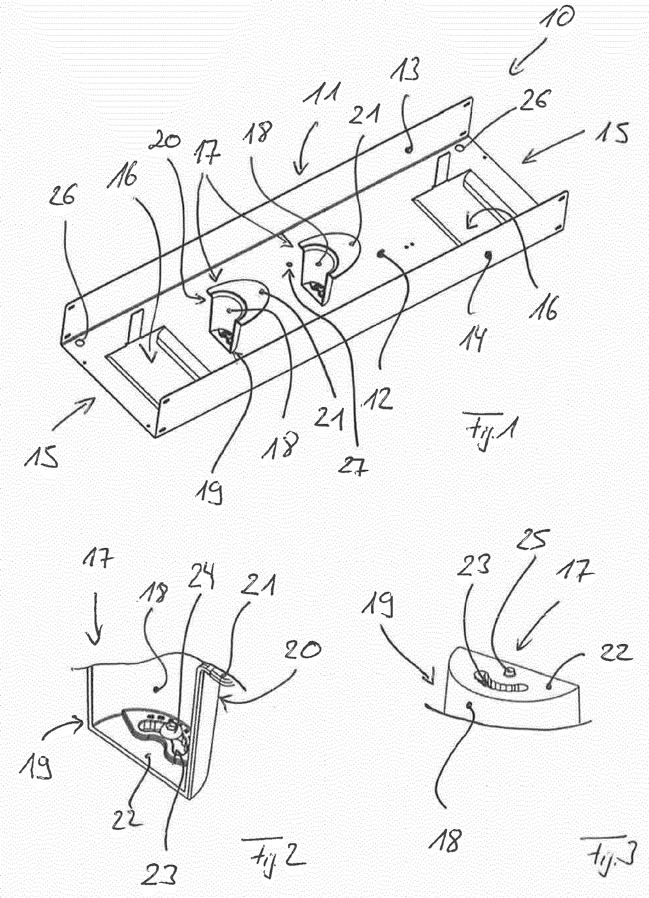

Figure 1 shows an exemplary embodiment of an apparatus 10 for horizontally guiding optical fibre cables and for horizontally depositing excess lengths of the optical fibre cables in the region of an optical fibre distributor device. The apparatus 10 comprises a main body 11, wherein the main body 11 has a base wall 12 and longitudinal walls 13, 14 angled with respect to the base wall 12 and extending on longitudinal sides of the base wall 12. The base wall 12 and the two longitudinal walls 13 and 14 together define the main body 11, which is contoured with a U-shaped profile, wherein horizontal cable passage openings 15 via which optical fibre cables can be introduced and/or discharged in the horizontal direction are formed on narrow sides of the main body 11.

In the shown, preferred exemplary embodiment, the main body 11 is open on both opposed narrow sides so that a horizontal cable passage opening 15 of this type for horizontally introducing and/or discharging optical fibre cables is therefore formed on both opposed narrow sides. The main body may also be open just on one side on a single narrow side.

At least one vertical cable passage opening 16 is introduced into the base wall 12 of the main body 11. In the shown, preferred exemplary embodiment, a vertical cable passage opening 16 is introduced into the base wall 12 in the region of both opposed cable insertion openings 15 and is used for vertical introduction and/or discharge of optical fibre cables.

At least one deflection element 17 for optical fibre cables to be handled is assembled on the base wall 12 of the main body 11. In the exemplary embodiment of Figure 1, two deflection elements 17 of this type are assembled on the base wall 12, specifically between the two vertical cable passage openings 16 and also between the two longitudinal walls 13 and 14. Each of the deflection elements 17 is used to deflect one or more optical fibre cables so as to form an open or closed loop of the respective optical fibre cable.

Each deflection element 17 for optical fibre cables has a curved cable guiding wall 18. The respective deflection element 17 is rotatably or pivotably fastened to the base wall 12 of the main body 11, adjacently to a first end 19 of the cable guiding wall 18, wherein a protrusion 21 is formed on the deflection element 17 adjacently to an opposed second end 20 of the cable guiding wall 18 and extends parallel to the base wall 12 of the main body 11. These protrusions 21 are used to hold down the optical fibre cables.

As can best be seen in Figure 2, each deflection element 17 has, at the first end 19, an end wall 22, via which the respective deflection element 17 bears against the base wall 12 of the main body 11 when assembled on the main body 11, wherein a curved slot 23 is introduced into the end wall 22. A fastening element 24 extends into this slot 23, the respective deflection element 17 being rotatable relative to the base wall 12 of the main body 11 when the fastening element 24 is loosened, whereas the respective deflection element 17 is not rotatable relative to the base wall 12 of the main body 11 when the fastening element 24 is tightened. The axis of rotation of the deflection element 17 is defined here by a protrusion 25, which is formed on the end wall 22 and which projects into a corresponding recess in the base wall 12 of the main body 11.

In accordance with Figure 1, recesses 26 via which the apparatus 10 can be fastened to an optical fibre distributor device are introduced into the base wall 12 of the main body 11. Furthermore, a connection element 27 to earth the apparatus 10 is formed on the base wall 12 of the main body 11.

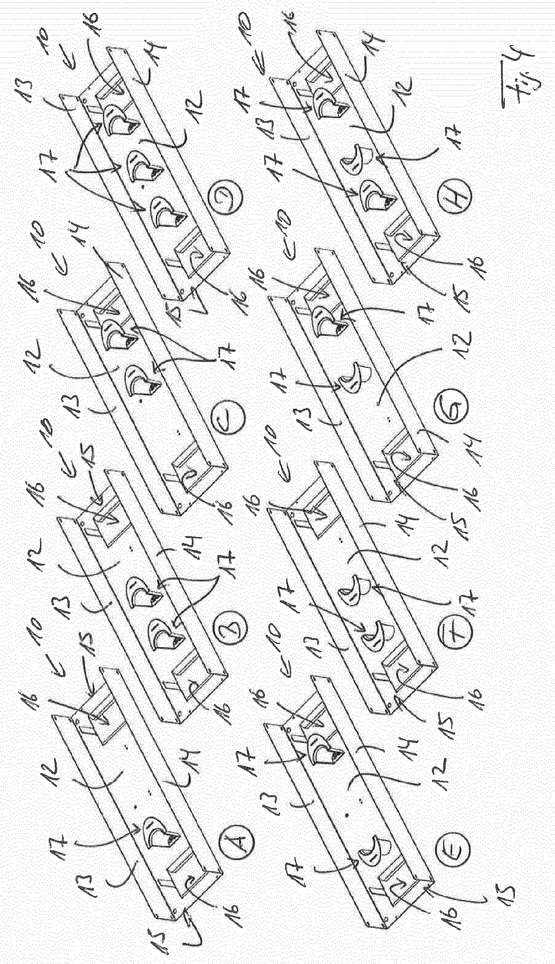

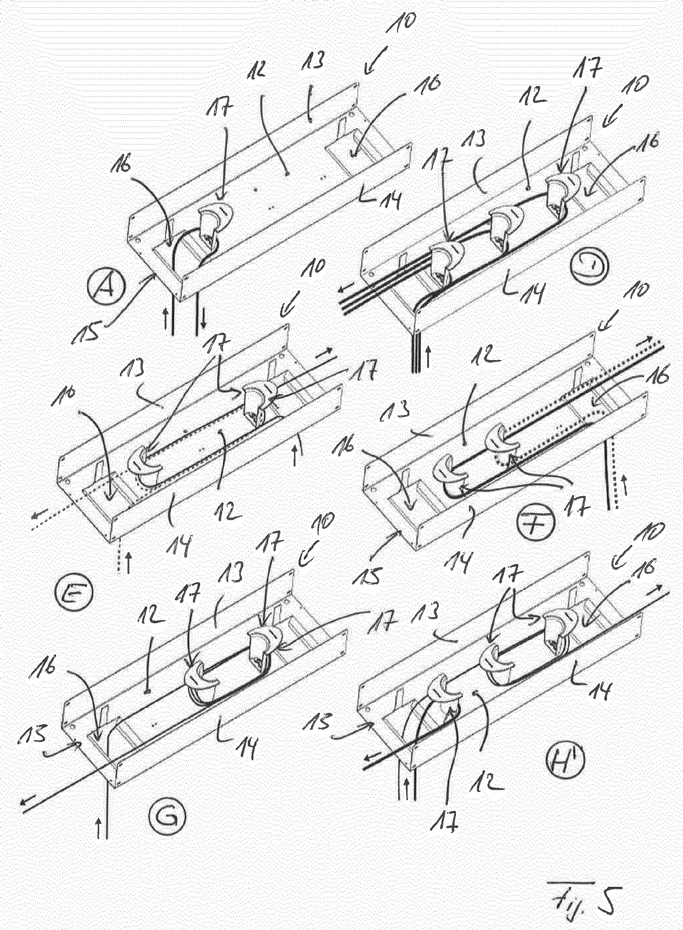

Figures 4 and 5 show different configurations A to H and H' of the apparatus 10, said configurations differing by the number and orientation of the deflection elements 17. In variant A, merely a single deflection 17 is therefore assembled on the base wall 12. In each of variants B, C, E, F and G, two deflection elements 17 are assembled on the base wall 12, more specifically in different positions and/or with different orientations in each case. In variants D, H and H', three deflection elements 17 are assembled on the base wall 12 with matched orientations. Figure 5 shows possible modes of guidance of optical fibre cables for some of the configurations of the apparatus and also possible options for handling or depositing excess lengths of the optical fibre cables.

The manner in which the optical fibre cables can be introduced and/or discharged in the horizontal direction via the horizontal cable passage openings 15 and in the vertical direction via the vertical cable passage openings 16 can be deduced from Figure 5. Figure 5 also shows the horizontal deposition and handling of excess lengths of the optical fibre cables with the formation of open and closed cable loops.

The apparatus is used for horizontal handling and for horizontal cable guidance of optical fibre cables in the region of an optical fibre distributor device designed as a distributor cabinet or a distributor rack, wherein such an optical fibre distributor device comprises a frame and, assembled in the frame, a support element, on which modules for receiving splice connections and/or patch connections are assembled.

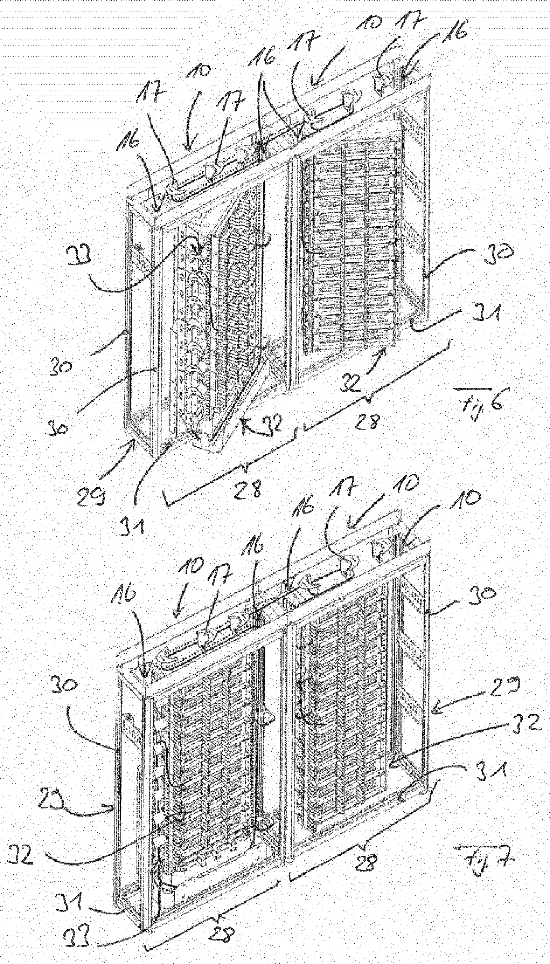

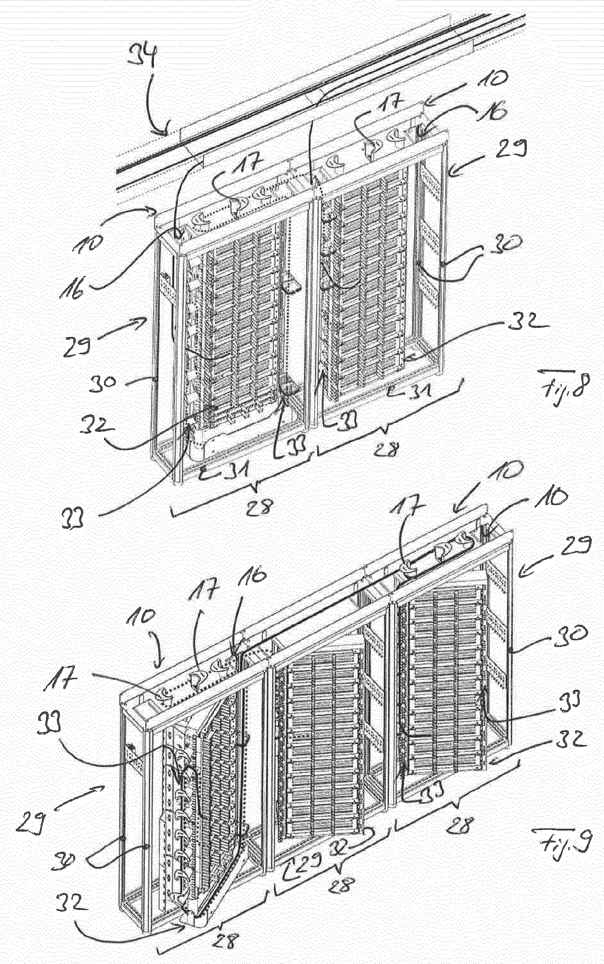

Figures 6 to 9 each show systems consisting of a plurality of optical fibre distributor devices 28, wherein two optical fibre distributor devices 28 are combined to form a system in each of Figures 6, 7 and 8, and wherein three optical fibre distributor devices 28 are arranged side by side in a row in Figure 9 and are combined to form a system consisting of a plurality of optical fibre distributor devices 28.

Each of the optical fibre distributor devices 28 shown in Figures 6 to 9 has a frame 29, which is formed from vertically running struts 30 and horizontally running struts 31, wherein, in the respective frame 29, a support element 32 is assembled, on which modules for receiving splice connections and/or patch connections are received. This support element 32 is preferably designed as a pivotable subrack.

An apparatus 10 is assembled on the frame 29 of each of the optical fibre distributor devices 28 above the respective support element 32 in each of the exemplary embodiments in Figures 6, 7 and 8. In Figure 8, a cable conduit 34 extends above the optical fibre distributor devices 28. In the exemplary embodiment in Figure 9, an apparatus 10 is fastened to the respective frame 29 above the respective support element 32 in the region of the two outer optical fibre distributor devices 28.

It is thus possible, in the region of each optical fibre distributor device 28, specifically on the frame 29 thereof above the support elements 32, which are used to receive modules in order to deposit patch connections and/or splice connections, to guide optical fibre cables in the horizontal direction along the optical fibre distributor device 28 or along the system consisting of optical fibre distributor devices 28 positioned side by side in a row, wherein optical fibre cables guided above the support elements 32 can be fed via the vertical cable passage openings 16 as required to the individual support elements 32 and therefore to the modules fastened to the support elements in order to deposit patch connections and/or splice connections.

Here, the apparatuses 10 are positioned or assembled in such a way on the frame 29 of the respective optical fibre distributor device 28 above the support element 32 thereof that the vertical cable passage opening 16, or each vertical cable passage opening 16, which is used to transfer the optical fibre cables starting from the apparatus 10 in the direction of the support element 32 of the respective optical fibre distributor device 28, is aligned with a vertical cable guiding region 33 of the respective optical fibre distributor device 28, said cable guiding region running in the respective support element 32. These vertical cable guiding regions 33 are used to guide the optical fibre cables and also to handle excess lengths in the vertical direction, laterally beside the respective support element 33 of the respective optical fibre distributor device 28.

The apparatus 10 makes it possible, in the region of an optical fibre distributor device 28, to guide in a defined manner optical fibre cables not only in the vertical direction, but rather additionally in the horizontal direction and also to handle, specifically to deposit, excess lengths of the optical fibre cables in the horizontal direction. The handling of optical fibre cables can thus be improved.

In particular, a multiplicity of optical fibre cables can be handled at the same time with good accessibility of the individual cables and also of the support elements, so as to thus ensure high packing densities.

### List of Reference Signs

- 10: apparatus
- 11: main body
- 12: base wall
- 13: side wall
- 14: side wall
- 15: cable passage opening
- 16: cable passage opening
- 17: deflection element
- 18: cable guiding wall
- 19: end
- 20: end
- 21: protrusion
- 22: end wall
- 23: slot
- 24: fastening apparatus
- 25: protrusion
- 26: recess
- 27: connection element
- 28: optical fibre distributor device
- 29: frame
- 30: strut
- 31: strut
- 32: support element
- 33: cable guiding region
- 34: cable conduit

## Claims

1. Apparatus for horizontally guiding optical fibre cables and for horizontally depositing excess lengths thereof in the region of an optical fibre distributor device, said apparatus comprising a main body (11), which has a base wall (12) and longitudinal walls (13, 14) angled with respect to the base wall (12) and extending on longitudinal sides of the base wall (12), wherein the base wall (12) together with the longitudinal walls (13, 14) defines the main body (11) contoured with a U-shaped profile, said main body being open at least on one narrow side of the base wall and having a horizontal cable passage opening (15) at least on one narrow side, wherein at least one vertical cable passage opening (16) is introduced into the base wall (12), and wherein at least one deflection element (17) for optical fibre cables is positioned on the base wall (12) between the two longitudinal walls (13, 14)
**characterized in that** the respective deflection element (17), at the first end (19), has an end wall (22) with a curved slot (23), into which a fastening element (24) for fastening the respective deflection element (17) to the base wall (12) of the main body (11) projects, the respective deflection element (17) being rotatable relative to the base wall (12) of the main body (11) when the fastening element (24) is loosened, and the respective deflection element (17) not being rotatable relative to the base wall (12) of the main body (11) when the fastening element (24) is tightened.

2. Apparatus according to Claim 1, **characterized in that** the main body (11) is open on both opposed narrow sides and has a horizontal cable passage opening (15), on both opposed narrow sides, for horizontal introduction and/or discharge of optical fibre cables.

3. Apparatus according to Claim 1 or 2, **characterized in that** the base wall (12), at opposed ends adjacent to the narrow sides, has a vertical cable passage opening (16) for vertical introduction and/or discharge of optical fibre cables.

4. Apparatus according to Claim 3, **characterized in that** at least one deflection element (17) for optical fibre cables is assembled on the base wall (12) between the two vertical cable passage openings (16).

5. Apparatus according to one of Claims 1 to 4, **characterized in that** the deflection element (17), or each deflection element (17), has a curved cable guiding wall (18) for optical fibre cables.

6. Apparatus according to Claim 5, **characterized in that** the respective deflection element (17) is rotatably or pivotably fastened to the base wall (12) of the main body (11), adjacently to a first end (19) of the cable guiding wall (18).

7. Apparatus according to one of Claims 1 to 6, **characterized in that** the respective deflection element (17), adjacently to an opposed second end (20) of the cable guiding wall (18), has a protrusion (21) extending parallel to the base wall (12) of the main body (11).

8. Optical fibre distributor device, specifically a distributor cabinet or distributor rack, comprising a frame (29) and, assembled in the frame, a support element (32), on which modules for receiving splice connections and/or patch connections are assembled, **characterized in that** an apparatus according to one of Claims 1 to 8 is assembled on the frame (29) above the support element (32).

9. Optical fibre distributor device according to Claim 8, **characterized in that** the vertical cable passage opening (16), or each vertical cable passage opening (16), of the respective apparatus is aligned with a respective vertical cable guiding region (33) of the optical fibre distributor device (28), said cable guiding region running laterally beside the support element (32).

10. System consisting of a plurality of optical fibre distributor devices (28), specifically distributor cabinets or distributor racks, arranged laterally side by side, each optical fibre distributor device (28) having a frame (29) and, assembled in the frame (29), a support element (32), on which modules for receiving splice connections and/or patch connections are assembled, **characterized in that**, in the region of at least two optical fibre distributor devices, an apparatus according to one of Claims 1 to 8 is assembled on the frame (29) of the respective optical fibre distributor device (28) above the support element (32) thereof.

11. System according to Claim 10, **characterized in that**, in the region of laterally outer optical fibre distributor devices (28), a row of optical fibre distributor devices positioned side by side is assembled on the frame (29) of the respective optical fibre distributor device (28) above the support element (32) thereof.

12. System according to Claim 10 or 11, **characterized in that** the vertical cable passage opening (16), or each cable passage opening (16), of the respective apparatus is aligned with a respective vertical cable guiding region (33) of the respective optical fibre distributor device (28), said cable guiding region running laterally beside the respective support element (32).

## Patentansprüche

1. Vorrichtung zum horizontalen Führen von Lichtwellenleiterkabeln und zum horizontalen Anordnen von Überlängen davon in der Region einer Verteilervorrichtung für Lichtwellenleiter; wobei die Vorrichtung einen Hauptkörper (11) umfasst, der eine Basiswand (12) und longitudinale Wände (13, 14), die bezüglich der Basiswand (12) angewinkelt sind und sich an longitudinalen Seiten der Basiswand (12) erstrecken, besitzt, wobei die Basiswand (12) zusammen mit den longitudinalen Wänden (13, 14) den Hauptkörper (11), der mit einem U-förmigen Profil geformt ist, definiert, wobei der Hauptkörper an mindestens einer schmalen Seite der Basiswand offen ist und an mindestens einer schmalen Seite eine horizontale Kabeldurchgangsöffnung (15) besitzt, wobei mindestens eine vertikale Kabeldurchgangsöffnung (16) in die Basiswand (12) eingebracht ist, und wobei mindestens ein Umlenkelement (17) für Lichtwellenleiterkabel zwischen den zwei longitudinalen Wänden (13, 14) an der Basiswand (12) positioniert ist,
**dadurch gekennzeichnet, dass** das jeweilige Umlenkelement (17) bei dem ersten Ende (19) eine Stirnwand (22) mit einem gekrümmten Schlitz (23), in den ein Befestigungselement (24) zum Befestigen des jeweiligen Umlenkelements (17) an der Basiswand (12) des Hauptkörpers (11) ragt, besitzt, wobei das jeweilige Umlenkelement (17) bezüglich der Basiswand (12) des Hauptkörpers (11) drehbar ist, wenn das Befestigungselement (24) gelöst ist, und das jeweilige Umlenkelement (17) bezüglich der Basiswand (12) des Hauptkörpers (11) nicht drehbar ist, wenn das Befestigungselement (24) festgezogen ist.

2. Vorrichtung nach Anspruch 1, **dadurch gekennzeichnet, dass** der Hauptkörper (11) an beiden gegenüberliegenden schmalen Seiten offen ist und an beiden gegenüberliegenden schmalen Seiten eine horizontale Kabeldurchgangsöffnung (15) für eine horizontale Einführung und/oder ein horizontales Austreten von Lichtwellenleiterkabeln besitzt.

3. Vorrichtung nach Anspruch 1 oder 2, **dadurch gekennzeichnet, dass** die Basiswand (12) an gegenüberliegenden Enden, die zu den schmalen Seiten benachbart sind, eine vertikale Kabeldurchgangsöffnung (16) für eine vertikale Einführung und/oder eine vertikales Austreten von Lichtwellenleiterkabeln besitzt.

4. Vorrichtung nach Anspruch 3, **dadurch gekennzeichnet, dass** mindestens ein Umlenkelement (17) für Lichtwellenleiterkabel an der Basiswand (12) zwischen zwei vertikalen Kabeldurchgangsöffnungen (16) angeordnet ist.

5. Vorrichtung nach einem der Ansprüche 1 bis 4, **dadurch gekennzeichnet, dass** das Umlenkelement (17) oder jedes Umlenkelement (17) eine gekrümmte Kabelführungswand (18) für Lichtwellenleiter besitzt.

6. Vorrichtung nach Anspruch 5, **dadurch gekennzeichnet, dass** das jeweilige Umlenkelement (17) an der Basiswand (12) des Hauptkörpers (11) zu einem ersten Ende (19) der Kabelführungswand (18) benachbart drehbar oder schwenkbar befestigt ist.

7. Vorrichtung nach einem der Ansprüche 1 bis 6, **dadurch gekennzeichnet, dass** das jeweilige Umlenkelement (17) benachbart zu einem gegenüberliegenden zweiten Ende (20) der Kabelführungswand (18) einen Vorsprung (21), der sich parallel zu der Basiswand (12) des Hauptkörpers (11) erstreckt, besitzt.

8. Verteilervorrichtung für Lichtwellenleiter, insbesondere ein Verteilerschrank oder ein Verteilergestell, die einen Rahmen (29) und ein Tragelement (32), das in dem Rahmen angeordnet ist und an dem Module zum Aufnehmen von Spleißverbindungen und/oder Patch-Verbindungen angeordnet sind, enthält, **dadurch gekennzeichnet, dass** eine Vorrichtung gemäß einem der Ansprüche 1 bis 8 an dem Rahmen (29) über dem Tragelement (32) angeordnet ist.

9. Verteilervorrichtung für Lichtwellenleiter nach Anspruch 8, **dadurch gekennzeichnet, dass** die vertikale Kabeldurchgangsöffnung (16) oder jede vertikale Kabeldurchgangsöffnung (16) der jeweiligen Vorrichtung auf eine jeweilige vertikale Kabelführungsregion (33) der Verteilervorrichtung für Lichtwellenleiter (28) ausgerichtet ist, wobei die Kabelführungsregion neben dem Tragelement (32) seitlich verläuft.

10. System, das aus mehreren Verteilervorrichtungen (28) für Lichtwellenleiter besteht, insbesondere Verteilerschränke oder Verteilergestelle, die nebeneinander seitlich angeordnet sind, wobei jede Verteilervorrichtung (28) für Lichtwellenleiter einen Rahmen (29) und ein Tragelement (32), das in dem Rahmen (29) angeordnet ist und an dem Module zum Aufnehmen von Spleißverbindungen und/oder Patch-Verbindungen angeordnet sind, enthält, **dadurch gekennzeichnet, dass** in der Region mindestens zweier Verteilervorrichtungen für Lichtwellenleiter eine Vorrichtung gemäß einem der Ansprüche 1 bis 8 an dem Rahmen (29) der jeweiligen Verteilervorrichtung (28) für Lichtwellenleiter über dem Tragelement (32) davon angeordnet ist.

11. System nach Anspruch 10, **dadurch gekennzeichnet, dass** in der Region seitlicher äußerer Verteilervorrichtungen (28) für Lichtwellenleiter eine Reihe von Verteilervorrichtungen für Lichtwellenleiter, die nebeneinander positioniert sind, an dem Rahmen (29) der jeweiligen Verteilervorrichtung (28) für Lichtwellenleiter über dem Tragelement (32) davon angeordnet ist.

12. System nach Anspruch 10 oder 11, **dadurch gekennzeichnet, dass** die vertikale Kabeldurchgangsöffnung (16) oder jede Kabeldurchgangsöffnung (16) der jeweiligen Vorrichtung auf eine jeweilige vertikale Kabelführungsregion (33) der jeweiligen Verteilervorrichtung (28) für Lichtwellenleiter ausgerichtet ist, wobei die Kabelführungsregion neben dem jeweiligen Tragelement (32) seitlich verläuft.

## Revendications

1. Appareil pour guider horizontalement des câbles à fibres optiques et pour en entreposer horizontalement des longueurs excessives dans la région d'un dispositif de distribution de fibres optiques, ledit appareil comprenant un corps principal (11), lequel est doté d'une paroi de base (12) et de parois longitudinales (13, 14) formant un angle avec la paroi de base (12) et s'étendant sur des côtés longitudinaux de la paroi de base (12), appareil dans lequel la paroi de base (12) conjointement avec les parois longitudinales (13, 14) définit le corps principal (11) au contour pourvu d'un profil en U, ledit corps principal étant ouvert au moins d'un côté étroit de la paroi de base et doté d'une ouverture de passage de câbles horizontale (15) au moins d'un côté étroit, appareil dans lequel au moins une ouverture de passage de câbles verticale (16) est ménagée dans la paroi de base (12), et appareil dans lequel au moins un élément de déviation (17) pour câbles à fibres optiques est placé sur la paroi de base (12) entre les deux parois longitudinales (13, 14)
**caractérisé en ce que** l'élément de déviation (17) respectif est doté, au niveau de la première extrémité (19), d'une paroi d'extrémité (22) pourvue d'une fente incurvée (23), dans laquelle pénètre un élément de fixation (24) servant à fixer l'élément de déviation (17) respectif à la paroi de base (12) du corps principal (11), l'élément de déviation (17) respectif étant rotatif par rapport à la paroi de base (12) du corps principal (11) lorsque l'élément de fixation (24) est desserré, et l'élément de déviation (17) respectif n'étant pas rotatif par rapport à la paroi de base (12) du corps principal (11) lorsque l'élément de fixation (24) est serré.

2. Appareil selon la revendication 1, **caractérisé en ce que** le corps principal (11) est ouvert des deux côtés étroits opposés et doté d'une ouverture de passage de câbles horizontale (15), des deux côtés étroits opposés, permettant l'introduction et/ou la sortie horizontales de câbles à fibres optiques.

3. Appareil selon la revendication 1 ou 2, **caractérisé en ce que** la paroi de base (12) est dotée, au niveau d'extrémités opposées adjacentes aux côtés étroits, d'une ouverture de passage de câbles verticale (16) permettant l'introduction et/ou la sortie verticales de câbles à fibres optiques.

4. Appareil selon la revendication 3, **caractérisé en ce qu'**au moins un élément de déviation (17) pour câbles à fibres optiques est monté sur la paroi de base (12) entre les deux ouvertures de passage de câbles verticales (16).

5. Appareil selon l'une des revendications 1 à 4, **caractérisé en ce que** l'élément de déviation (17), ou chaque élément de déviation (17), est doté d'une paroi de guidage de câbles incurvée (18) pour câbles à fibres optiques.

6. Appareil selon la revendication 5, **caractérisé en ce que** l'élément de déviation (17) respectif est fixé rotatif ou pivotant à la paroi de base (12) du corps principal (11), en position adjacente à une première extrémité (19) de la paroi de guidage de câbles (18).

7. Appareil selon l'une des revendications 1 à 6, **caractérisé en ce que** l'élément de déviation (17) respectif, en position adjacente à une deuxième extrémité opposée (20) de la paroi de guidage de câbles (18), est doté d'une protubérance (21) s'étendant parallèlement à la paroi de base (12) du corps principal (11).

8. Dispositif de distribution de fibres optiques, plus particulièrement armoire de distribution ou baie de distribution, comprenant un bâti (29) et, monté dans le bâti, un élément support (32) sur lequel sont montés des modules servant à recevoir des raccords par épissure et/ou des raccords par brassage, **caractérisé en ce que** l'appareil selon l'une des revendications 1 à 8 est monté sur le bâti (29) au-dessus de l'élément support (32).

9. Dispositif de distribution de fibres optiques selon la revendication 8, **caractérisé en ce que** l'ouverture de passage de câbles verticale (16), ou chaque ouverture de passage de câbles verticale (16), de l'appareil respectif est alignée avec une région de guidage de câbles verticale (33) respective du dispositif de distribution (28) de fibres optiques, ladite région de guidage de câbles courant latéralement à côté de l'élément support (32).

10. Système composé d'une pluralité de dispositifs de distribution (28) de fibres optiques, plus particulièrement d'armoires de distribution ou de baies de distribution, agencés latéralement côte à côte, chaque dispositif de distribution (28) de fibres optiques étant doté d'un bâti (29) et, monté dans le bâti (29), d'un élément support (32) sur lequel sont montés des modules servant à recevoir des raccords par épissure et/ou des raccords par brassage, **caractérisé en ce que**, dans la région d'au moins deux dispositifs de distribution de fibres optiques, un appareil selon l'une des revendications 1 à 8 est monté sur le bâti (29) du dispositif de distribution (28) de fibres optiques respectif au-dessus de son élément support (32).

11. Système selon la revendication 10, **caractérisé en ce que**, dans la région de dispositifs de distribution (28) de fibres optiques latéralement extérieurs, une rangée de dispositifs de distribution de fibres optiques placés côte à côte est montée sur le bâti (29) du dispositif de distribution (28) de fibres optiques respectif au-dessus de son élément support (32).

12. Système selon la revendication 10 ou 11, **caractérisé en ce que** l'ouverture de passage de câbles verticale (16), ou chaque ouverture de passage de câbles (16), de l'appareil respectif est alignée avec une région de guidage de câbles verticale (33) respective du dispositif de distribution (28) de fibres optiques respectif, ladite région de guidage de câbles courant latéralement à côté de l'élément support (32) respectif.
